(19) **Europäisches Patentamt** / **European Patent Office** / **Office européen des brevets**

(11) **EP 4 663 500 A1**

(12) **EUROPEAN PATENT APPLICATION**
published in accordance with Art. 153(4) EPC

(43) Date of publication:
17.12.2025 Bulletin 2025/51

(21) Application number: 23944223.9

(22) Date of filing: 11.12.2023

(51) International Patent Classification (IPC):
*B60W 50/029* (2012.01)　　*B60W 10/08* (2006.01)
*B60W 10/18* (2012.01)　　*B60W 10/22* (2006.01)
*B60W 40/00* (2006.01)

(52) Cooperative Patent Classification (CPC):
Y02T 10/72

(86) International application number:
PCT/CN2023/137780

(87) International publication number:
WO 2025/007502 (09.01.2025 Gazette 2025/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 05.07.2023 CN 202310822640

(71) Applicant: Beijing Jingwei Hirain Technologies
Co., Inc.
Beijing 100015 (CN)

(72) Inventors:
• WANG, Qinghui
Beijing 100015 (CN)
• CHEN, Xi
Beijing 100015 (CN)
• LIU, Xin
Beijing 100015 (CN)
• WANG, Zhengfang
Beijing 100015 (CN)

(74) Representative: Grey, Ian Michael
Venner Shipley LLP
200 Aldersgate
London EC1A 4HD (GB)

(54) **CHASSIS INTEGRATED CONTROL SYSTEM AND METHOD, AND DEVICE, MEDIUM AND PROGRAM PRODUCT**

(57)　A chassis integrated control system, comprising: a chassis integrated controller (100), and a wheel-steering electric motor assembly (210), an electromechanical brake caliper assembly (310), a wheel-side drive electric motor assembly (410), an adjustable shock-absorber assembly (510), a wheel-speed sensor (710), a front-view camera assembly (720), a height sensor (730), etc., which are connected to the chassis integrated controller (100) by means of a hard wire, wherein the chassis integrated controller (100) processes a signal, and uses a processing result to control the wheel-steering electric motor assembly (210), the wheel-side drive electric motor assembly (410), the electromechanical brake caliper assembly (310) and the adjustable shock-absorber assembly (510). Further disclosed are a chassis integrated control method, an electronic device, a computer-readable storage medium and a computer program product.

Fig. 1

EP 4 663 500 A1

**Description**

**CROSS-REFERENCE TO RELATED APPLICATIONS**

The present disclosure claims the priority to Chinese Patent Application No. 202310822640.X filed on July 5, 2023, and titled "CHASSIS INTEGRATED CONTROL SYSTEM AND METHOD", which is incorporated herein by reference in its entirety.

**TECHNICAL FIELD**

The present disclosure belongs to the technical field of vehicles, and in particular to a chassis integrated control system, method, device, medium, and program product.

**BACKGROUND**

At present, vehicle chassis electronic control systems are mostly independent systems each with a single function, such as Electric Power Steering (EPS) systems, Electronic Stability Control (ESC) systems, and Continuous Damping Control (CDC) systems, in which each system may only perform its own function of steering, braking or damping adjustment, and each system operates independently according to a predefined logic.

**SUMMARY**

Some embodiments of the present disclosure provide a chassis integrated control system, which comprises a chassis integrated controller, and a wheel-steering motor assembly, an electromechanical brake caliper assembly, a wheel-side drive motor assembly, an adjustable shock-absorber assembly, a wheel-speed sensor, a front-view camera assembly, a height sensor, an inertial navigation sensor, a steering-wheel angle sensor, a steering-wheel torque sensor, a brake pedal displacement sensor, an accelerator pedal displacement sensor, and a brake pedal switch connected to the chassis integrated controller by hard wire; wherein the wheel-steering motor assembly is configured to provide a wheel-steering angle signal to the chassis integrated controller, the electromechanical brake caliper assembly is configured to provide an electromechanical brake caliper clamping force signal to the chassis integrated controller, the wheel-side drive motor assembly is configured to provide a drive torque signal to the chassis integrated controller, the wheel-speed sensor is configured to provide a wheel-speed signal to the chassis integrated controller, the front-view camera assembly is configured to provide a front-view camera image signal to the chassis integrated controller, the height sensor is configured to provide a suspension height signal to the chassis integrated controller, the inertial navigation sensor is configured to provide an acceleration signal and an angular rate signal of a vehicle body to the chassis integrated controller, the steering-wheel angle sensor is configured to provide a steering-wheel angle signal to the chassis integrated controller, the steering-wheel torque sensor is configured to provide a driver-applied steering-wheel torque signal to the chassis integrated controller, the brake pedal displacement sensor is configured to provide a brake pedal displacement signal to the chassis integrated controller, the accelerator pedal displacement sensor is configured to provide an accelerator pedal displacement signal to the chassis integrated controller, the brake pedal switch is configured to provide a brake pedal applied status signal to the chassis integrated controller; and the chassis integrated controller is configured to: set, in a case where a target signal provided by a target component among a plurality of components is not acquired, the target signal as a first signal, and merge acquired signals of the plurality of components and the first signal using Kalman filtering and a multi-degree-of-freedom vehicle model to obtain dynamics parameters of the vehicle, the target signal being a signal provided by any one of the plurality of components; logically determine an intention of a driver using the first signal that is related to the driver to obtain intention information of the driver; input the intention information and parameter information of the vehicle to a preset linear vehicle model to obtain target dynamics parameters of the vehicle; construct a cost function, input the target dynamics parameters, a vehicle comfort target value, and the dynamics parameters to the cost function and the multi-degree-of-freedom vehicle model, and determine a target front-wheel-steering angle, a target rear-wheel-steering angle, a target wheel drive torque, a target wheel brake torque, and a target shock-absorber additional force; and control the wheel-steering motor assembly using the target front-wheel-steering angle and the target rear-wheel-steering angle, control the wheel-side drive motor assembly and the electromechanical brake caliper assembly using the target wheel drive torque and the target wheel brake torque respectively, and control the adjustable shock-absorber assembly using the target shock-absorber additional force.

Some embodiments of the present disclosure further provide a chassis integrated control method, which comprises acquiring signals of a plurality of components, the signals comprising a steering angle signal, an electromechanical brake caliper clamping force signal, a torque signal, a wheel-speed signal, an image signal, a suspension height signal, an acceleration signal, an angular rate signal, a displacement signal, and a brake pedal applied status signal;

setting, in a case where a target signal provided by a target component among a plurality of components is not acquired, the target signal as a first signal, and merging acquired signals of the plurality of components and the first signal using Kalman filtering and a multi-degree-of-freedom vehicle model to obtain dynamics parameters of the vehicle, the target signal being a signal provided by any one of the plurality of components; logically determining an intention of a driver using the first signal that is related to the driver to obtain intention information of the driver; inputting the intention information and parameter information of the vehicle to a preset linear vehicle model to obtain target dynamics parameters of the vehicle; constructing a cost function, inputting the target dynamics parameters, a vehicle comfort target value, and the dynamics parameters to the cost function and the multi-degree-of-freedom vehicle model, and determining a target front-wheel-steering angle, a target rear-wheel-steering angle, a target wheel drive torque, a target wheel brake torque, and a target shock-absorber additional force; and controlling the wheel-steering motor assembly using the target front-wheel-steering angle and the target rear-wheel-steering angle, controlling the wheel-side drive motor assembly and the electromechanical brake caliper assembly using the target wheel drive torque and the target wheel brake torque respectively, and controlling the adjustable shock-absorber assembly using the target shock-absorber additional force.

Some embodiments of the present disclosure further provide an electronic device, which comprises a processor and a memory storing computer program instructions, wherein the processor, when executing the computer program instructions, carries out any step of the aforesaid chassis integrated control method.

Some embodiments of the present disclosure further provide a computer-readable storage medium storing computer program instructions, wherein the computer program instructions, when executed by a processor, carry out any step of the aforesaid chassis integrated control method.

Some embodiments of the present disclosure further provide a computer program product, wherein when instructions in the computer program product are executed by a processor of an electronic device, it causes the electronic device to carry out any step of the aforesaid chassis integrated control method.

## BRIEF DESCRIPTION OF THE DRAWINGS

In order to explain the technical solutions of the embodiments of the present disclosure more clearly, a brief introduction to the drawings for the embodiments of the present disclosure will be provided below. For a person skilled in the art, additional drawings may be derived from these drawings without inventive efforts.

Fig. 1 shows a schematic structural view of a chassis integrated control system according to an embodiment of the present disclosure;
Fig. 2 shows a schematic structural view of a chassis integrated control system according to another embodiment of the present disclosure;
Fig. 3 shows a schematic structural view of a chassis integrated control system according to yet another embodiment of the present disclosure;
Fig. 4 shows a schematic structural view of a chassis integrated control system according to still another embodiment of the present disclosure;
Fig. 5 shows a schematic structural view of a chassis integrated control system according to still another embodiment of the present disclosure;
Fig. 6 shows a schematic structural view of a chassis integrated control system according to still another embodiment of the present disclosure;
Fig. 7 shows a schematic structural view of a chassis integrated control system according to still another embodiment of the present disclosure;
Fig. 8 shows a schematic structural view of a chassis integrated control system according to still another embodiment of the present disclosure;
Fig. 9 shows a flow chart of a chassis integrated control method according to still another embodiment of the present disclosure; and
Fig. 10 shows a schematic structural view of an electronic device according to still another embodiment of the present disclosure.

## DETAILED DESCRIPTION

Features and exemplary embodiments of various aspects of the present disclosure will be described in detail below. In order to make the objects, technical solutions and advantages of the present disclosure more clear, the present disclosure will be further described in detail below with reference to the drawings and specific embodiments. It should be understood that, the specific embodiments described herein are only intended to explain the present disclosure, but not to limit the present disclosure. For those of ordinary skilled in the art, the present disclosure may be implemented without some of those specific details. The following description of the embodiments is only for providing a better understanding of the present disclosure by showing examples.

It should be noted that, relational terms such as first, second, and the like are used herein merely for distinguishing one entity or operation from another without necessarily requiring or implying any such actual relationship or order between such entities or operations. Moreover, the terms "include", "comprise", or any other variation thereof, are intended to cover a non-exclusive inclusion, such that a(n) process, method, article or device that includes a series of elements not only includes those elements but also includes other elements not explicitly listed or also includes elements inherent to such process, method, article or device. An element preceded by "include..." does not, without more constraints, preclude the existence of additional identical elements in the process, method, article or device that includes the element.

At present, vehicle chassis electronic control systems are mostly independent systems each with a single function, such as Electric Power Steering (EPS) systems, Electronic Stability Control (ESC) systems, and Continuous Damping Control (CDC) systems, in which each system may only perform its own function of steering, braking or damping adjustment, and each system operates independently according to a predefined logic. Thus, when a function of a certain chassis electronic control system fails, since other chassis electronic control systems do not have the function of the failed electronic control system, the vehicle loses the function originally provided by the failed electronic control system.

The embodiments of the present disclosure provide a chassis integrated control system and a method in order to solve the problems in the prior art. First, the chassis integrated control system provided in the embodiments of the present disclosure will be introduced below.

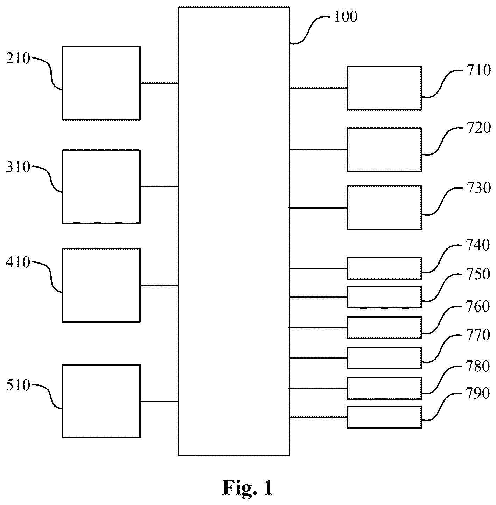

Fig. 1 shows a schematic structural view of a chassis integrated control system according to an embodiment of the present disclosure. As shown in Fig. 1, the chassis integrated control system provided in the embodiments of the present disclosure includes a chassis integrated controller 100, and a wheel-steering motor assembly 210, an electromechanical brake caliper assembly 310, a wheel-side drive motor assembly 410, an adjustable shock-absorber assembly 510, a wheel-speed sensor 710, a front-view camera assembly 720, a height sensor 730, an inertial navigation sensor 740, a steering-wheel angle sensor 750, a steering-wheel torque sensor 760, a brake pedal displacement sensor 770, an accelerator pedal displacement sensor 780, and a brake pedal switch 790 that are connected to the chassis integrated controller by hard wire.

The wheel-steering motor assembly 210 is configured to provide a wheel-steering angle signal to the chassis integrated controller 100. The electromechanical brake caliper assembly 310 is configured to provide an electromechanical brake caliper clamping force signal to the chassis integrated controller 100. The wheel-side drive motor assembly 410 is configured to provide a drive torque signal to the chassis integrated controller 100. The wheel-speed sensor 710 is configured to provide a wheel-speed signal to the chassis integrated controller 100. The front-view camera assembly 720 is configured to provide a front-view camera image signal to the chassis integrated controller 100. The height sensor 730 is configured to provide a suspension height signal to the chassis integrated controller 100. The inertial navigation sensor 740 is configured to provide an acceleration signal and an angular rate signal of a vehicle body to the chassis integrated controller 100. The steering-wheel angle sensor 750 is configured to provide a steering-wheel angle signal to the chassis integrated controller 100. The steering-wheel torque sensor 760 is configured to provide a driver-applied steering-wheel torque signal to the chassis integrated controller 100. The brake pedal displacement sensor 770 is configured to provide a brake pedal displacement signal to the chassis integrated controller 100. The accelerator pedal displacement sensor 780 is configured to provide an accelerator pedal displacement signal to the chassis integrated controller 100. The brake pedal switch 790 is configured to provide a brake pedal applied status signal to the chassis integrated controller 100. The chassis integrated controller 100 is configured to: set, in a case where a target signal provided by a target component among a plurality of components is not acquired, the target signal as a first signal, and merge acquired signals of the plurality of components and the first signal using Kalman filtering and a multi-degree-of-freedom vehicle model to obtain dynamics parameters of the vehicle, the target signal being a signal provided by any one of the plurality of components; logically determine an intention of a driver using the first signal that is related to the driver to obtain intention information of the driver; input the intention information and parameter information of the vehicle to a preset linear vehicle model to obtain target dynamics parameters of the vehicle; construct a cost function, input the target dynamics parameters, a vehicle comfort target value, and the dynamics parameters to the cost function and the multi-degree-of-freedom vehicle model, and determine a target front-wheel-steering angle, a target rear-wheel-steering angle, a target wheel drive torque, a target wheel brake torque, and a target shock-absorber additional force; and control the wheel-steering motor assembly 210 using the target front-wheel-steering angle and the target rear-wheel-steering angle, control the wheel-side drive motor assembly 410 and the electromechanical brake caliper assembly 310 using the target wheel drive torque and the target wheel brake torque respectively, and control the adjustable shock-absorber assembly 510 using the target shock-absorber additional force.

The chassis integrated control system provided in the embodiments of the present disclosure includes a chassis integrated controller, and a wheel-steering motor assembly, an electromechanical brake caliper assembly, a wheel-side drive motor assembly, an adjustable shock-absorber assembly, a wheel-speed sensor, a front-view camera assembly, a height sensor, an inertial navigation sensor, a steering-wheel angle sensor, a steering-wheel torque sensor, a brake pedal displacement sensor, an accelerator pedal displacement sensor, and a brake pedal switch connected to the chassis integrated controller by hard wire. Here, the wheel-steering motor assembly is configured to provide a wheel-steering angle signal to the chassis integrated controller. The electromechanical brake caliper assembly is configured to provide an electromechanical brake caliper clamping force signal to the chassis integrated controller. The wheel-side drive motor assembly is configured to provide a drive torque signal to the chassis integrated controller. The wheel-speed sensor is configured to provide a wheel-speed signal to the chassis integrated controller. The front-view camera assembly is configured to provide a front-view camera image signal to the chassis integrated controller. The height sensor is configured to provide a suspension height signal to the chassis integrated controller. The inertial navigation sensor is configured to provide an acceleration signal and an angular rate signal of a vehicle body to the chassis integrated controller. The steering-wheel angle sensor is configured to provide a steering-wheel angle signal to the chassis integrated controller. The steering-wheel torque sensor is configured to provide a driver-applied steering-wheel torque signal to the chassis integrated controller. The brake pedal displacement sensor is configured to provide a brake pedal displacement signal to the chassis integrated controller. The accelerator pedal displacement sensor is configured to provide an accelerator pedal displacement signal to the chassis integrated controller. The brake pedal switch is configured to provide a brake pedal applied status signal to the chassis integrated controller. The chassis integrated controller is configured to set, in a case where a target signal provided by a target component among a plurality of components is not acquired, the target signal as a first signal, and merge acquired signals of the plurality of components and the first signal using Kalman filtering and a multi-degree-of-freedom vehicle model to obtain dynamics parameters of the vehicle, the target signal being a signal provided by any one of the plurality of components; logically determine an intention of a driver using the first signal that is related to the driver to obtain intention information of the driver; input the intention information and parameter information of the vehicle to a preset linear vehicle model to obtain target dynamics parameters of the vehicle; construct a cost function, input the target dynamics parameters, a vehicle comfort target value, and the dynamics parameters to the cost function and the multi-degree-of-freedom vehicle model, and determine a target front-wheel-steering angle, a target rear-wheel-steering angle, a target wheel drive torque, a target wheel brake torque, and a target shock-absorber additional force; and control the wheel-steering motor assembly using the target front-wheel-steering angle and the target rear-wheel-steering angle, control the wheel-side drive motor assembly and the electromechanical brake caliper assembly using the target wheel drive torque and the target wheel brake torque respectively, and control the adjustable shock-absorber assembly using the target shock-absorber additional force. In this manner, the chassis integrated controller is connected to a plurality of components. In the case where the signal provided by any component among the plurality of components is not acquired, a target value of the dynamics parameters of the vehicle is determined by remaining signals, and the components of the vehicle are controlled according to the target value. Under a condition that a certain component of the vehicle fails, the remaining components may coordinate to provide the function originally provided by the failed electronic control system, thereby achieving vehicle control stability.

It should be understood that, the above general description and the following detailed description are merely exemplary and illustrative ones, and do not limit the present disclosure.

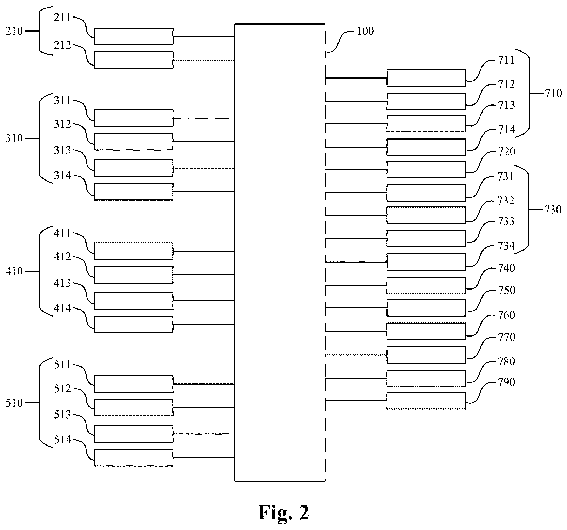

Fig. 2 shows a schematic structural view of a chassis integrated control system according to another embodiment of the present disclosure. As shown in Fig. 2, the wheel-steering motor assembly 210 includes a front-wheel-steering motor assembly 211 and a rear-wheel-steering motor assembly 212. A motor in the wheel-steering motor assembly 210 may be, but is not limited to, a permanent magnet synchronous motor, and a drive line of the motor is connected to the chassis integrated controller 100 by hard wire and controlled by the chassis integrated controller 100 to achieve control of rotation angle, rotation speed and torque of the motor. The wheel-steering motor assembly 210 includes a motor rotation angle sensor, and a signal line, a power line, and a grounding line of the sensor are connected to the chassis integrated controller 100 by hard wire to achieve direct or indirect acquisition of a motor rotation angle signal. The front-wheel-steering motor assembly 211 and the rear-wheel-steering motor assembly 212 may each be connected to the chassis integrated controller 100 by hard wire. The wheel-steering motor assembly 210 may convert the signal collected by the sensor to a wheel-steering angle signal, and the front-wheel-steering motor assembly 211 and the rear-wheel-steering motor assembly 212 are configured to provide the wheel-steering angle signal to the chassis integrated controller 100.

The electromechanical brake caliper assembly 310 may include an electromechanical brake caliper assembly 311, an electromechanical brake caliper assembly 312, an electromechanical brake caliper assembly 313, and an electromechanical brake caliper assembly 314. A motor in the electromechanical brake caliper assembly 310 may be, but is not limited to, a permanent magnet synchronous motor, and a drive line of the motor is connected to the chassis integrated controller 100 by hard wire and controlled by the chassis integrated controller 100 to achieve control of rotation angle, rotation speed and torque of the motor. The electromechanical brake caliper assembly 310 includes a motor rotation angle sensor; a signal line, a power line, and a grounding line of the sensor are connected to the chassis integrated controller 100 by hard wire to achieve direct or indirect acquisition of a motor rotation angle signal. The electromechanical brake caliper assembly 310 includes a force sensor, and a signal line, a power line, and a grounding line of the sensor are connected to the chassis integrated controller 100 by hard wire to achieve direct or indirect acquisition of an electromechanical brake caliper clamping force signal. The electromechanical brake caliper assembly 310 is configured to provide the electromechanical brake caliper clamping force signal to the chassis integrated controller 100. The electromechanical brake caliper assembly 311, the electromechanical brake caliper assembly 312, the electromechanical brake caliper assembly 313, and the electromechanical brake caliper assembly 314 may each be connected to the chassis integrated controller 100 by hard wire. The electromechanical brake caliper assembly 311, the electromechanical brake caliper assembly 312, the electromechanical brake caliper assembly 313, and the electromechanical brake caliper assembly 314 may each be configured to provide the electromechanical brake caliper clamping force signal to the chassis integrated controller 100.

The wheel-side drive motor assembly 410 may include a wheel-side drive motor assembly 411, a wheel-side drive motor assembly 412, a wheel-side drive motor assembly 413, and a wheel-side drive motor assembly 414. A motor in the wheel-side drive motor assembly 410 may be, but is not limited to, a permanent magnet synchronous motor, and a drive line of the motor is connected to a wheel-side motor controller assembly 400 by hard wire and controlled by the wheel-side motor controller assembly 400 to achieve control of rotation speed and torque of the motor. The wheel-side drive motor assembly 410 includes a motor rotation angle sensor; a signal line, a power line, and a grounding line of the sensor are connected to the wheel-side motor controller assembly 400 by hard wire to achieve direct or indirect acquisition of a motor rotation angle signal. The wheel-side drive motor assembly 411, the wheel-side drive motor assembly 412, the wheel-side drive motor assembly 413, and the wheel-side drive motor assembly 414 may each be connected to the chassis integrated controller 100 by hard wire, and may convert the signal collected by the sensor to a drive torque signal. The wheel-side drive motor assembly 411, the wheel-side drive motor assembly 412, the wheel-side drive motor assembly 413, and the wheel-side drive motor assembly 414 may each be configured to provide the drive torque signal to the chassis integrated controller 100.

The wheel-speed sensor 710 may include a wheel-speed sensor 711, a wheel-speed sensor 712, a wheel-speed sensor 713, and a wheel-speed sensor 714. A signal line, a power line, and a grounding line of the wheel-speed sensor 710 are connected to the chassis integrated controller 100 by hard wire to achieve direct or indirect acquisition of a wheel-speed signal, and the wheel-speed sensor 711, the wheel-speed sensor 712, the wheel-speed sensor 713, and the wheel-speed sensor 714 may each be configured to provide the wheel-speed signal to the chassis integrated controller 100.

A signal line of the front-view camera assembly 720 is connected to the chassis integrated controller 100 by hard wire to achieve image data acquisition of the road surface in front of the vehicle, and the front-view camera assembly 720 is configured to provide a front-view camera image signal to the chassis integrated controller 100.

The height sensor 730 may include a height sensor 731, a height sensor 732, a height sensor 733, and a height sensor 734. A signal line, a power line, and a grounding line of the height sensor 730 are connected to the chassis integrated controller 100 by hard wire to achieve direct or indirect acquisition of a height distance signal between wheels and a vehicle body, and the height sensor 731, the height sensor 732, the height sensor 733, and the height sensor 734 are each configured to provide a suspension height signal to the chassis integrated controller 100.

A signal line, a power line, and a grounding line of the inertial navigation sensor 740 are connected to the chassis integrated controller 100 by hard wire to achieve direct or indirect acquisition of acceleration signals and angular rate signals in X, Y, and Z directions of the vehicle body, and the inertial navigation sensor 740 is configured to provide the acceleration signal and the angular rate signal of the vehicle body to the chassis integrated controller 100.

A signal line, a power line, and a grounding line of the steering-wheel angle sensor 750 are connected to the chassis integrated controller 100 by hard wire to achieve direct or indirect acquisition of the steering-wheel angle signal, and the steering-wheel angle sensor 750 is configured to provide the steering-wheel angle signal to the chassis integrated controller 100.

A signal line, a power line, and a grounding line of the steering-wheel torque sensor 760 are connected to the chassis integrated controller 100 by hard wire to achieve direct or indirect acquisition of a driver-applied steering-wheel torque signal, and the steering-wheel torque sensor 760 is configured to provide the driver-applied steering-wheel torque signal to the chassis integrated controller 100.

A signal line, a power line, and a grounding line of the brake pedal displacement sensor 770 are connected to the chassis integrated controller 100 by hard wire to achieve direct or indirect acquisition of a brake pedal displacement signal, and the brake pedal displacement sensor 770 is configured to provide the brake pedal displacement signal to the chassis integrated controller 100.

A signal line, a power line, and a grounding line of the accelerator pedal displacement sensor 780 are connected to the chassis integrated controller 100 by hard wire to achieve direct or indirect acquisition of an accelerator pedal displacement signal, and the accelerator pedal displacement sensor 780 is configured to provide the accelerator pedal displacement signal to the chassis integrated controller 100.

A signal line, a power line, and a grounding line of the brake pedal switch 790 are connected to the chassis integrated controller 100 by hard wire to achieve direct or indirect acquisition of a brake pedal applied status signal, and the brake pedal switch 790 is configured to provide the brake pedal applied status signal to the chassis integrated controller 100. A wiring configuration of the brake pedal switch may be composed of a signal line, a power line and a grounding line; it may also be composed of a power line and a grounding line, and one of the lines carries signal information; or, it may also be composed of a single power line carrying signal information.

The chassis integrated controller 100 is configured to: set, in a case where a target signal provided by a target component among a plurality of components is not acquired, the target signal as a first signal, and merge acquired signals of the plurality of components and the first signal using Kalman filtering and a multi-degree-of-freedom vehicle model to obtain dynamics parameters of the vehicle, the target signal being a signal provided by any one of the plurality of components; logically determine an intention of a driver using the first signal that is related to the driver to obtain intention information of the driver; input the intention information and parameter information of the vehicle to a preset linear vehicle model to obtain target dynamics parameters of the vehicle; construct a cost function, input the target dynamics parameters, a vehicle comfort target value, and the dynamics parameters to the cost function and the multi-degree-of-freedom vehicle model, and determine a target front-wheel-steering angle, a target rear-wheel-steering angle, a target wheel drive torque, a target wheel brake torque, and a target shock-absorber additional force; and control the wheel-steering motor assembly 210 using the target front-wheel-steering angle and the target rear-wheel-steering angle, control the wheel-side drive motor assembly 410 and the electromechanical brake caliper assembly 310 using the target wheel drive torque and the target wheel brake torque respectively, and control the adjustable shock-absorber assembly 510 using the target shock-absorber additional force.

The adjustable shock-absorber assembly 510 includes an adjustable shock-absorber assembly 511, an adjustable shock-absorber assembly 512, an adjustable shock-absorber assembly 513, and an adjustable shock-absorber assembly 514. The adjustable shock-absorber assembly 511, the adjustable shock-absorber assembly 512, the adjustable shock-absorber assembly 513, and the adjustable shock-absorber assembly 514 may each be connected to the chassis integrated controller 100 by hard wire and controlled by the chassis integrated controller 100 to achieve a damping adjustment function of the adjustable shock-absorber assembly.

In this manner, the chassis integrated controller is connected to a plurality of components. In a case where the signal provided by any component among the plurality of components is not acquired, a target value of the dynamics parameters of the vehicle is determined by remaining signals, and the components of the vehicle are controlled according to the target value. Under a condition that a certain component of the vehicle fails, the remaining components may coordinate to provide the function originally provided by the failed electronic control system, thereby achieving vehicle control stability.

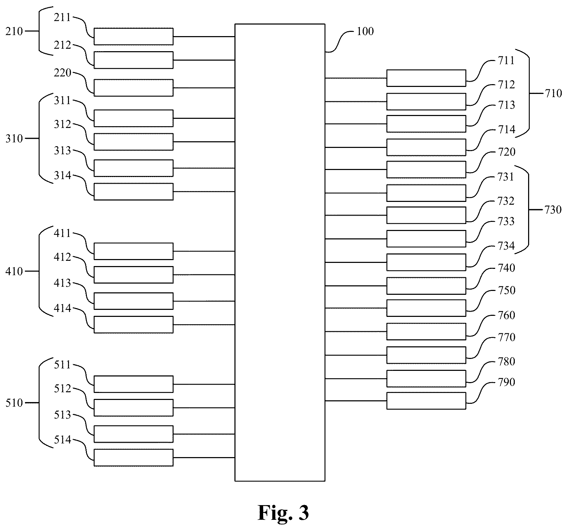

Fig. 3 shows a schematic structural view of a chassis integrated control system according to yet another embodiment of the present disclosure. As shown in Fig. 3, the system may further include a road feel motor assembly 220 which is connected to the chassis integrated controller 100 by hard wire, and configured to provide the driver-applied steering-wheel torque signal to the chassis integrated controller 100.

In some embodiments of the present disclosure, a motor in the road feel motor assembly 220 may be, but is not limited to, a permanent magnet synchronous motor, and a drive line of the motor is connected to the chassis integrated controller 100 by hard wire and controlled by the chassis integrated controller 100 to achieve control of rotation angle, rotation speed and torque of the motor. The road feel motor assembly 220 includes a motor rotation angle sensor; a signal line, a power line, and a grounding line of the sensor are connected to the chassis integrated controller 100 by hard wire to achieve direct or indirect acquisition of a motor rotation angle signal. The road feel motor assembly 220 includes a torque sensor, and a signal line, a power line, and a grounding line of the sensor are connected to the chassis integrated controller 100 by hard wire to achieve direct or indirect acquisition of a torque signal output by the motor. The road feel motor assembly 220 may convert the signal acquired by the sensor to the driver-applied steering-wheel torque signal, and the road feel motor assembly 220 is configured to provide the driver-applied steering-wheel torque signal to the chassis integrated controller 100.

In this manner, the driver-applied steering-wheel torque signal may also be provided by the road feel motor assembly.

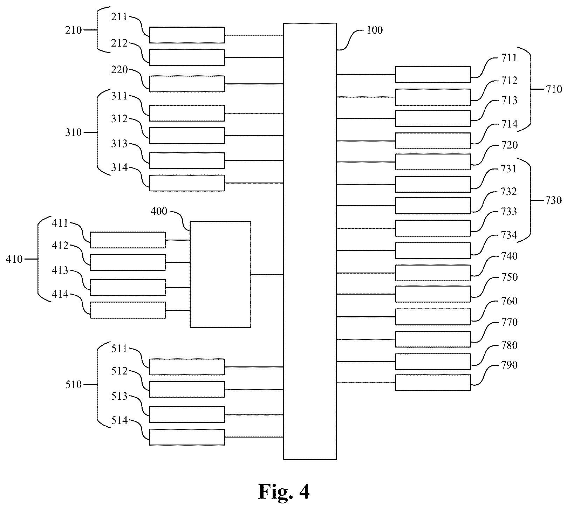

Fig. 4 shows a schematic structural view of a chassis integrated control system according to still another embodiment of the present disclosure. As shown in Fig. 4, the system may further include a wheel-side motor controller assembly 400 which is connected to the chassis integrated controller 100 through a communication bus, and connected to the wheel-side drive motor assembly 410 by hard wire, and configured to control a rotation speed and a torque of a motor in the wheel-side drive motor assembly 410.

In the embodiments of the present disclosure, the wheel-side motor controller assembly is connected to the chassis integrated controller 100 through a communication bus. The communication bus may be a Controller Area Network (CAN) or Controller Area Network with Flexible Data-Rate (CANFD) bus, a Flexray bus, or an Ethernet bus.

In the embodiments of the present disclosure, the wheel-side drive motor assembly 411, the wheel-side drive motor assembly 412, the wheel-side drive motor assembly 413, and the wheel-side drive motor assembly 414 may be each connected to the wheel-side motor controller assembly 400 by hard wire. The wheel-side motor controller assembly 400 is configured to control a rotation speed and a torque of motors in the wheel-side drive motor assembly 411, the wheel-side drive motor assembly 412, the wheel-side drive motor assembly 413, and the wheel-side drive motor assembly 414.

In this manner, the rotation speed and the torque of the motor in the wheel-side drive motor assembly are controlled by the wheel-side motor controller assembly, and a processing pressure of the chassis integrated controller may be reduced.

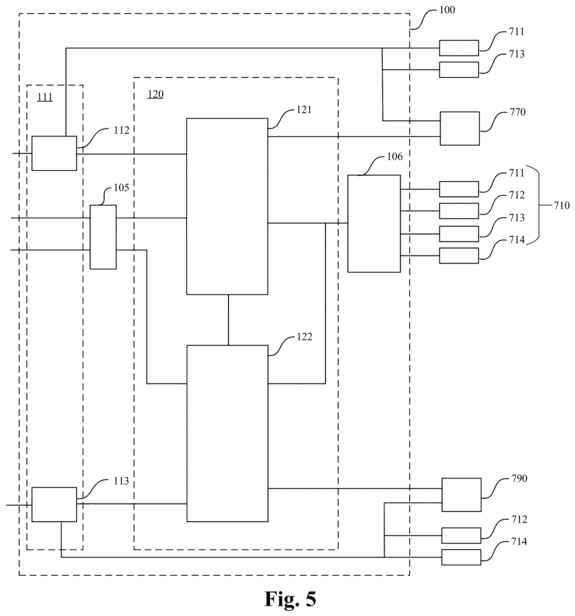

Fig. 5 shows a schematic structural view of a chassis integrated control system according to still another embodiment of the present disclosure. As shown in Fig. 5, the chassis integrated controller 100 includes a wheel-speed signal processing circuit 106 and a micro-control unit 120; the wheel-speed sensor 710 is connected to the micro-control unit 120 through the wheel-speed signal processing circuit 106; the wheel-speed signal processing circuit 106 is configured to convert the wheel-speed signal to a target wheel-speed signal that is identifiable by the micro-control unit 120; and the micro-control unit 120 is configured to set, in a case where a target signal provided by a target component among a plurality of components is not acquired, the target signal as a first signal, and merge acquired signals of the plurality of components and the first signal using Kalman filtering and a multi-degree-of-freedom vehicle model to obtain dynamics parameters of the vehicle, the target signal being a signal provided by any one of the plurality of components; logically determine an intention of a driver using the first signal that is related to the driver to obtain intention information of the driver; input the intention information and parameter information of the vehicle to a preset linear vehicle model to obtain target dynamics parameters of the vehicle; construct a cost function, inputting the target dynamics parameters, a vehicle comfort target value, and the dynamics parameters to the cost function and the multi-degree-of-freedom vehicle model, and determine a target front-wheel-steering angle, a target rear-wheel-steering angle, a target wheel drive torque, a target wheel brake torque, and a target shock-absorber additional force; and control the wheel-steering motor assembly using the target front-wheel-steering angle and the target rear-wheel-steering angle, control the wheel-side drive motor assembly and the electromechanical brake caliper assembly using the target wheel drive torque and the target wheel brake torque respectively, and control the adjustable shock-absorber assembly using the target shock-absorber additional force.

In the embodiments of the present disclosure, as shown in Fig. 5, the wheel-speed signal, which is transmitted by the signal line of the wheel-speed sensor 710 to the chassis integrated controller 100, is processed by the wheel-speed signal processing circuit 106 in the chassis integrated controller 100, and then transmitted to the micro-control unit 120. The wheel-speed sensor 710 may include a wheel-speed sensor 711, a wheel-speed sensor 712, a wheel-speed sensor 713, and a wheel-speed sensor 714, and the micro-control unit 120 includes a first micro-control unit 121 and a second micro-control unit 122. The first micro-control unit 121 communicates with the second micro-control unit 122 through the CANFD bus, the Flexray bus, or the Ethernet bus. The wheel-speed sensor 711, the wheel-speed sensor 712, the wheel-speed sensor 713, and the wheel-speed sensor 714 may each provide the wheel-speed signal to the wheel-speed signal processing circuit 106, and the wheel-speed signal is processed by the wheel-speed signal processing circuit 106 in the chassis integrated controller 100, and then transmitted to both the first micro-control unit 121 and the second micro-control unit 122.

In the embodiments of the present disclosure, the chassis integrated controller 100 includes an Ethernet communication circuit 105, and the first micro-control unit 121 and the second micro-control unit 122 are connected to the Ethernet communication circuit 105 for providing target data of the vehicle. The chassis integrated controller 100 includes a power management circuit 111 which includes a power management circuit 112 and a power management circuit 113 for providing power. Among them, the power management circuit 112 provides power to the first micro-control unit 121, and the power management circuit 113 provides power to the second micro-control unit 122.

In the embodiments of the present disclosure, power lines of the wheel-speed sensor 710 is connected to an internal circuit of the chassis integrated controller 100 in a following manner: the power management circuit 112 is connected to the wheel-speed sensor 711 and the wheel-speed sensor 713 to provide required regulated power supply to the wheel-speed sensor 711 and the wheel-speed sensor 713; and the power management circuit 113 is connected to the wheel-speed sensor 712 and the wheel-speed sensor 714 to provide required regulated power supply to the wheel-speed sensor 712 and the wheel-speed sensor 714.

The signal line of the brake pedal displacement sensor 770 is connected to the internal circuit of the chassis integrated controller 100 in a following manner: the signal line of the brake pedal displacement sensor 770 is connected to the first micro-control unit 121 via a signal processing circuit to achieve the acquisition of signal by the first micro-control unit 121. The power line of the brake pedal displacement sensor 770 is connected to the internal circuit of the chassis integrated controller 100 in a following manner: the power management circuit 112 is connected to the brake pedal displacement sensor 770 to provide required regulated power supply to the brake pedal displacement sensor 770.

The signal line of the brake pedal switch 790 is connected to the internal circuit of the chassis integrated controller 100 in a following manner: the signal line of the brake pedal switch 790 is connected to the second micro-control unit 122 via a signal processing circuit to achieve the acquisition of signal by the second micro-control unit 122. The power line of the brake pedal switch 790 is connected to the internal circuit of the chassis integrated controller 100 in a following manner: the power management circuit 113 is connected to the brake pedal switch 790 to provide required regulated power supply to the brake pedal switch 790.

In this manner, the wheel-speed signal processing circuit may convert the wheel-speed signal to the target wheel-speed signal that may be identified by the micro-control unit, whereby dynamics parameters of the vehicle may be adjusted more accurately, and the components of the vehicle may be controlled more accurately.

In the embodiments of the present disclosure, the adjustable shock-absorber assembly 510 includes a solenoid coil and a hydraulic solenoid valve assembly, and is configured to adjust a damping force of the vehicle.

The adjustable shock-absorber assembly 510 includes an adjustable shock-absorber assembly 511, an adjustable shock-absorber assembly 512, an adjustable shock-absorber assembly 513, and an adjustable shock-absorber assembly 514. Each of the adjustable shock-absorber assembly 511, the adjustable shock-absorber assembly 512, the adjustable shock-absorber assembly 513, and the adjustable shock-absorber assembly 514 includes solenoid coilhydraulic solenoid valve assembly, and a drive line of each solenoid coil is connected to the chassis integrated controller 100 by hard wire and controlled by the chassis integrated controller 100 to achieve a damping adjustment function of the adjustable shock-absorber assembly.

In this manner, a damping force of the vehicle may be adjusted by the solenoid coil and the hydraulic solenoid valve assembly, whereby dynamics parameters of the vehicle may be adjusted more accurately, and the components of the vehicle may be controlled more accurately.

In some embodiments of the present disclosure, the adjustable shock-absorber assembly 510 is further configured to adjust a damping force of the vehicle in a magnetorheological manner.

The adjustable shock-absorber assembly 511, the adjustable shock-absorber assembly 512, the adjustable shock-absorber assembly 513, and the adjustable shock-absorber assembly 514 each may adopt the magnetorheological manner instead of the solenoid coilhydraulic solenoid valve assembly, and correspondingly, each of the drive lines of the adjustable shock-absorber assembly 511, the adjustable shock-absorber assembly 512, the adjustable shock-absorber assembly 513, and the adjustable shock-absorber assembly 514 is connected to the chassis integrated controller 100 by hard wire and controlled by the chassis integrated controller 100 to achieve the damping adjustment function of the adjustable shock-absorber assembly.

In this manner, the damping force of the vehicle may be adjusted in the magnetorheological manner, whereby dynamics parameters of the vehicle may be adjusted more accurately, and the components of the vehicle may be controlled more accurately.

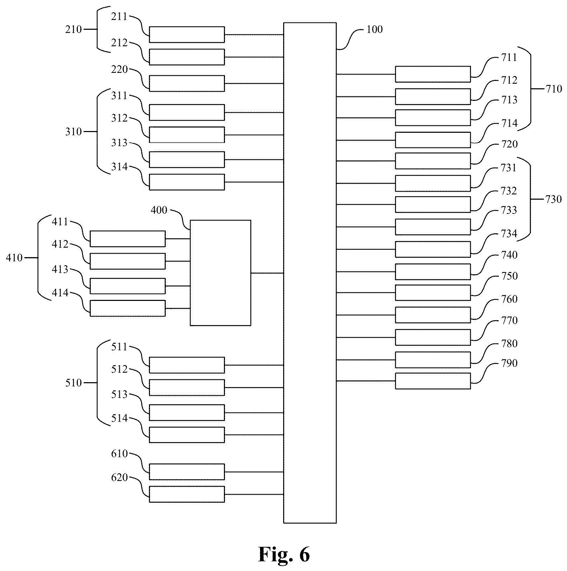

Fig. 6 shows a schematic structural view of a chassis integrated control system according to still another embodiment of the present disclosure. As shown in Fig. 6, the system further includes an air spring gas distribution valve assembly 610 and an air spring compressor assembly 620 which are each connected to the chassis integrated controller 100 by hard wire and are configured to adjust a height of the vehicle body.

The air spring gas distribution valve assembly 610 includes a solenoid coilhydraulic solenoid valve assembly, and a drive line of the solenoid coil is connected to the chassis integrated controller 100 by hard wire and controlled by the chassis integrated controller 100 to achieve gas distribution of the air spring, thereby adjusting a height of the air spring. A motor in the air spring compressor assembly 620 may be, but is not limited to, a brushed Direct Current (DC) motor, and a drive line of the motor is connected to the chassis integrated controller 100 by hard wire and controlled by the chassis integrated controller 100. The air spring compressor assembly 620 needs to be equipped with an air storage tank. When the air spring compressor assembly 620 operates under the control of the chassis integrated controller 100, the air spring compressor assembly 620 may generate high-pressure compressed air and deliver it to the air storage tank. The air spring compressor assembly 620 includes a gas pressure sensor, and a signal line, a power line, and a grounding line of the sensor are connected to the chassis integrated controller 100 by hard wire to achieve acquisition of a gas pressure signal in the circuit. The air spring compressor assembly 620 includes a temperature sensor, and a signal line, a power line, and a grounding line of the sensor are connected to the chassis integrated controller 100 by hard wire to achieve acquisition of an operating temperature signal of a motor of the compressor.

In this manner, the height of the vehicle may be adjusted by the air spring gas distribution valve assembly and the air spring compressor assembly, thereby achieving more accurate control.

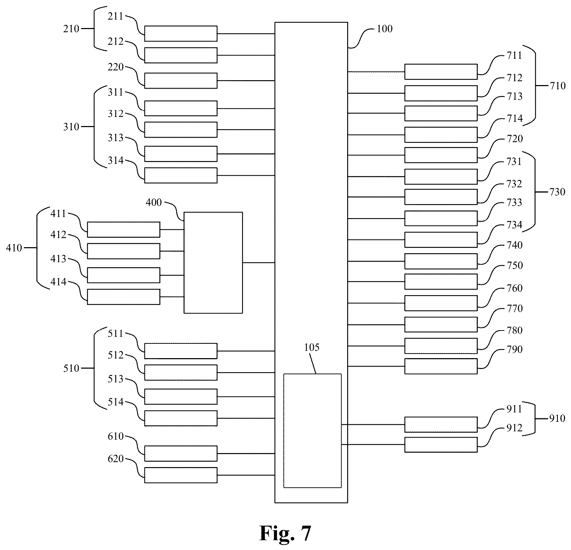

Fig. 7 shows a schematic structural view of a chassis integrated control system according to still another embodiment of the present disclosure. As shown in Fig. 7, the system further includes an Ethernet cable 910 which is connected to the chassis integrated controller 100 and configured to provide target data of the vehicle.

The Ethernet cable 910 may include an Ethernet cable 911 and an Ethernet cable 912. The Ethernet cable 911 and the Ethernet cable 912 are connected to the chassis integrated controller 100 through the Ethernet communication circuit 105, and are also connected to other controllers of the vehicle to form an Ethernet communication ring network, such that the chassis integrated controller 100 may receive data in the Ethernet communication ring network. The chassis integrated controller 100 includes an Ethernet communication circuit constituted by an Ethernet transceiver and a switch chip.

In this manner, the data in other controllers may be obtained through the Ethernet cable, thereby achieving more accurate control.

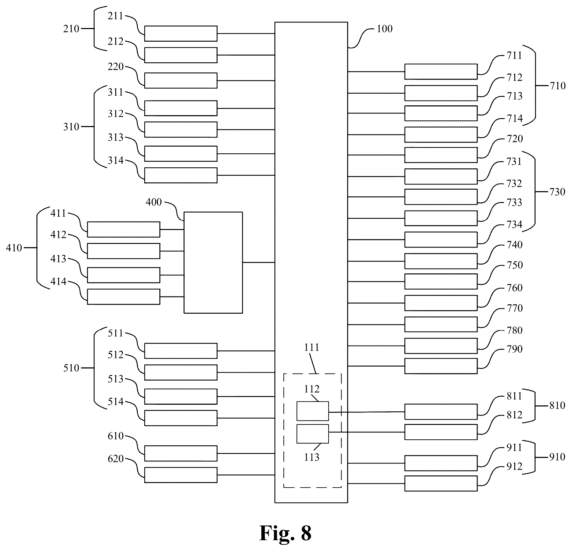

Fig. 8 shows a schematic structural view of a chassis integrated control system according to still another embodiment of the present disclosure. As shown in Fig. 8, the system further includes a vehicle-mounted power supply 810 which is connected to the chassis integrated controller 100 through a power management circuit 111 in the chassis integrated controller 100, and configured to provide power to the chassis integrated controller 100.

Here, the vehicle-mounted power supply 810 includes a vehicle-mounted power supply 811 and a vehicle-mounted power supply 812. The vehicle-mounted power supply 811 and the vehicle-mounted power supply 812 are two independent power supplies that do not affect each other, and a power line and a grounding line of each vehicle-mounted power supply are each connected to the chassis integrated controller 100 by hard wire for providing power to the chassis integrated controller 100. The power management circuit 111 includes a power management circuit 112 and a power management circuit 113. The vehicle-mounted power supply 811 provides power to the chassis integrated controller 100 through the power management circuit 112, and the vehicle-mounted power supply 812 provides power to the chassis integrated controller 100 through the power management circuit 113. The vehicle-mounted power supply 811 and the vehicle-mounted power supply 812 each may be a battery, or may be a power supply converted from a power battery by a DC-DC converter.

In this manner, the chassis integrated control system is powered by the vehicle-mounted power supply to achieve coordinated control of various components.

It should be noted that, the chassis integrated control method provided in the embodiments of the present disclosure may be executed by the chassis integrated control system or a control module for executing the chassis integrated control method in the chassis integrated control system.

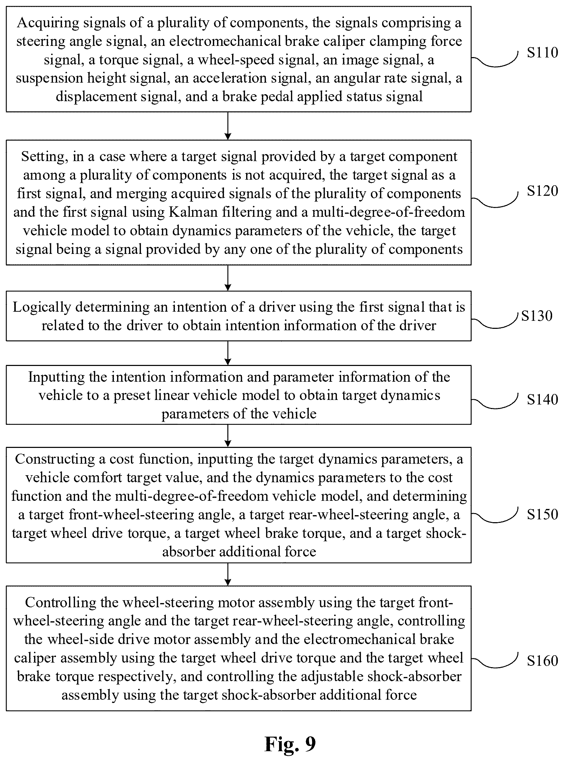

Fig. 9 shows a flow chart of a chassis integrated control method according to another embodiment of the present disclosure. As shown in Fig. 9, the chassis integrated control method according to the embodiments of the present disclosure includes S110 to S160.

In S110, signals of a plurality of components are acquired, and the signals include a steering angle signal, an electromechanical brake caliper clamping force signal, a torque signal, a wheel-speed signal, an image signal, a suspension height signal, an acceleration signal, an angular rate signal, a displacement signal, and a brake pedal applied status signal.

Here, the signals of the plurality of components are signals provided by the chassis integrated control system, including: a wheel-steering angle signal, a wheel-speed signal, a front-view camera image signal, a suspension height signal, an acceleration signal of a vehicle body, an angular rate signal of a vehicle body, a steering-wheel angle signal, a steering-wheel torque signal, a brake pedal displacement signal, a brake pedal switch signal, an accelerator pedal displacement signal, a wheel-side motor drive and anti-drag torque signal, an electromechanical brake caliper clamping force signal, and a drive torque signal, among others.

In S120, in a case where a target signal provided by a target component among a plurality of components is not acquired, the target signal is set as a first signal, and acquired signals of the plurality of components and the first signal are merged using Kalman filtering and a multi-degree-of-freedom vehicle model to obtain dynamics parameters of the vehicle, wherein the target signal is a signal provided by any one of the plurality of components.

In the embodiments of the present disclosure, when the target component in the chassis integrated control system fails, the target signal originally provided by the target component cannot be acquired. In a case where the target signal provided by the target component among the plurality of components is not acquired, the target signal is set as the first signal.

In the embodiments of the present disclosure, before acquired signals of the plurality of components and the first signal are merged by using Kalman filtering and the multi-degree-of- freedom vehicle model, the input acquired signals of the plurality of components and the first signal are filtered, calibrated, and diagnosed in sequence to obtain effective, reliable, and highly accurate usable signals after processing. Among them, the acceleration signal of the vehicle body needs to be dynamically calibrated. At present, the commonly used acceleration sensors may have signal drift during operation. In some algorithms that need to integrate the signals, the signal drift may have a significant impact on the accuracy of the calculation results, and thus the signal needs to be dynamically calibrated. Calibration refers to a real-time signal calibration during a driving process of the vehicle. For example, the process of calibrating a Y-direction acceleration signal of the vehicle body includes the following steps.

In a first step, a reference value is calculated; a filtered Y-direction acceleration signal is used as a first Y-direction acceleration signal, a Y-direction acceleration estimation signal calculated by a Kalman estimation algorithm is used as a second Y-direction acceleration signal, and a difference between the first Y-direction acceleration signal and the second Y-direction acceleration signal is used as a first error value.

In a second step, a signal calibration window period is identified and a calibration value is calculated; condition 1: sideslip angles of four wheels each are less than a first eigenvalue; condition 2: an absolute value of the first error value is greater than a second eigenvalue. In a predetermined continuous time period during which both condition 1 and condition 2 are satisfied, if a difference between a maximum value and a minimum value of the first error value is less than a third eigenvalue, an average value of the first error values in this time period is used as a second error value.

In a third step, signal calibration is performed; the first Y-direction acceleration signal and the second error value are added to obtain a third Y-direction acceleration signal. The third Y-direction acceleration signal is a dynamically calibrated signal.

It should be noted that, the dynamic calibration algorithm of X-direction and Z-direction acceleration signals of the vehicle body has the same principle as the dynamic calibration algorithm of the Y-direction acceleration signal of the vehicle body, and will not be repeated here.

Here, the dynamics parameters of the vehicle may include, but are not limited to, a front-wheel-steering angle, a rear-wheel-steering angle, a wheel-sideslip angle, a vertical force, a longitudinal force, and a lateral force between a tire and the ground, a wheel rotation angular acceleration, a tire slip ratio, a tire pressure, a road surface adhesion coefficient, a road slope, a vehicle mass, a vehicle longitudinal speed, and a vehicle lateral speed.

As an example, merging acquired signals of the plurality of components and the first signal using Kalman filtering and a multi-degree-of-freedom vehicle model to obtain dynamics parameters of the vehicle may include the following steps.

In a first step, based on the multi-degree-of-freedom vehicle model, a state equation is constructed with the parameters such as the vehicle longitudinal speed, the vehicle lateral speed, the vehicle angular rate, the vehicle mass, the road surface adhesion coefficient, and the road slope as state quantities, an observation equation is constructed with the parameters of the wheel-speed, the suspension height, the vehicle acceleration, and the vehicle angular rate as observation quantities, and the parameters such as the steering-wheel angle, the wheel-side motor drive and anti-drag torque, and the electromechanical brake caliper clamping force are used as control quantities in the state equation and the observation equation to obtain Kalman filter equations.

In a second step, calculation is performed using a Kalman state estimation algorithm to obtain estimation values of the above state quantities.

In a third step, based on a vehicle and wheel dynamic model and according to the obtained estimation values of the state quantities, parameters such as the front-wheel-steering angle, the rear-wheel-steering angle, the wheel-sideslip angle, the vertical force, the longitudinal force, and the lateral force between the tire and the ground, and the tire slip ratio are calculated. The multi-degree-of-freedom vehicle model and the vehicle and wheel dynamic model are known vehicle modeling methods, and will not be repeated here.

In S 130, an intention of a driver is logically determined using the first signal that is related to the driver to obtain intention information of the driver.

In the embodiments of the present disclosure, the first signal that is related to the driver may include, but is not limited to, the steering-wheel angle signal, the steering-wheel torque signal, the brake pedal displacement signal, the brake pedal switch signal, and the accelerator pedal displacement signal, and the intention information may include, but is not limited to, steering, acceleration, and deceleration.

The intention information may be determined by the following method.

The intention information of the driver may be calculated using Equation (1), Equation (2), and Equation (3), which are as follows:

$$F_{Drive} = f(AccPedalRatio) \quad (1)$$

$$F_{Brake} = g(BrakePedalRatio) \quad (2)$$

$$\delta = h(SteeringAngle) \quad (3)$$

where $F_{Drive} = f(AccPedalRatio)$ is a function related to an accelerator pedal ratio signal, $F_{Brake} = g(BrakePedalRatio)$ is a function related to a brake pedal ratio signal, and $\delta = h(SteeringAngle)$ is a function related to the steering-wheel angle signal. Equation (1), Equation (2), and Equation (3) are functions input by a user. These three functions may be customized according to the needs of the user. For example, $f(x) = A_f * x + B_f * \dot{x}$, where $A_f$ and $B_f$ are calibration parameters. The mathematical expressions of these three functions may be in any form as long as the corresponding functionalities may be achieved, which is not limited here.

In S 140, the intention information and parameter information of the vehicle are input to a preset linear vehicle model to obtain target dynamics parameters of the vehicle.

Here, the preset linear vehicle model is a model set in advance by the user, and the user may set different models according to the actual needs. In the embodiments of the present disclosure, the preset linear vehicle model is a model input by the user, and may be an equation or a system of equations.

In the embodiments of the present disclosure, the preset linear vehicle model is used as a calculation basis, and the intention information of the driver is quantitatively calculated to obtain the target dynamics parameters of the vehicle.

As an example, the target dynamics parameters of the vehicle are determined by the following process.

(a). A longitudinal target dynamics parameter $a_x$ is calculated using Equation (4), which is as follows:

$$a_x = \frac{1}{m}(F_{Drive} - F_{Brake} - C_{Wind} \cdot v^2 - F_{Roll}) \quad (4)$$

where m is a vehicle weight, v is a vehicle longitudinal speed, $F_{Drive}$ is a vehicle longitudinal driving force, $F_{Brake}$ is a vehicle longitudinal braking force, $C_{Wind}$ is a vehicle drag coefficient, and $F_{Roll}$ is a vehicle rolling resistance. Among them, $C_{Wind}$ and $F_{Roll}$ are numerical values input by the user, and the mathematical expressions of $F_{Drive} = f(AccPedalRatio)$ and $F_{Brake} = g(BrakePedalRatio)$ are expressions input by the user. $C_{Wind}$, $F_{Roll}$, $F_{Drive}$ and $F_{Brake}$ may be customized according to the needs of the user. The expressions of $F_{Drive}$ and $F_{Brake}$ may be in any form as long as the corresponding functionalities may be achieved, which is not limited here. $C_{Wind}$, $F_{Roll}$, $F_{Drive}$, and $F_{Brake}$ represent ideal vehicle drag characteristics, rolling resistance characteristics, accelerator pedal response characteristics, and brake pedal response characteristics, respectively.

(b). A lateral target dynamics parameter $a_y$ and a yaw target dynamics parameter $\dot{r}$ are calculated using Equation (5) and Equation (6), which are as follows:

$$a_y = \frac{1}{m}\left[k_f * \left(\beta + \frac{a*r}{v} - \delta\right) + k_r * (\beta - \frac{b*r}{v})\right] \quad (5)$$

$$\dot{r} = \frac{1}{I_z}\left[a * k_f * \left(\beta + \frac{a*r}{v} - \delta\right) - b * k_r * (\beta - \frac{b*r}{v})\right] \quad (6)$$

where $I_Z$ is a vehicle moment of inertia about Z-axis, $k_f$ and $k_r$ are respectively lateral stiffness of a front axle and a rear axle, β is a sideslip angle at center of mass, r is a yaw rate, a and b are respectively distances from the center of mass to the front axle and to the rear axle, $k_f$ and $k_r$ are values input by the user, and the expression $\delta = h(SteeringAngle)$ is an expression input by the user. Here, $k_f$, $k_r$ and δ may be customized according to the needs of the user, and the expression of δ may be in any form as long as the corresponding functionalities may be achieved, which is not limited here. And $k_f$, $k_r$ and δ represent ideal lateral stiffness characteristics of front axle tires and rear axle tires, and steering-wheel angle response characteristics, respectively.

Here, a longitudinal direction refers to a direction in which the vehicle travels, a lateral direction refers to a direction in which the vehicle moves left and right, and yaw refers to rotation about a vehicle center.

In the embodiments of the present disclosure, the preset linear vehicle model may be changed by the user. Therefore, different target dynamics parameters of the vehicle may be obtained on the premise that the intention information of the driver remains unchanged, thereby achieving adjustable vehicle handling characteristics.

In the embodiments of the present disclosure, by calibrating and adjusting the autonomously defined variables and functions, the adjustment of the vehicle dynamics target values may be achieved, thereby achieving adjustable vehicle handling characteristics.

In S150, a cost function is constructed, the target dynamics parameters, a vehicle comfort target value, and the dynamics parameters are input to the cost function and the multi-degree-of-freedom vehicle model, and a target front-wheel-steering angle, a target rear-wheel-steering angle, a target wheel drive torque, a target wheel brake torque, and a target shock-absorber additional force are determined.

In the embodiments of the present disclosure, the cost function is constructed using the target dynamics parameters and the vehicle comfort target value, in which the vehicle comfort target value is that target values of a vehicle pitch angle and a vehicle roll angle are zero. Taking a front-wheel-steering angle, a rear-wheel-steering angle, a wheel drive torque, a wheel brake torque, and a shock-absorber additional force as control variables, model predictive control is carried out based on a 14-degree-of-freedom vehicle model to obtain control targets of a target front-wheel-steering angle, a target rear-wheel-steering angle, a target wheel drive torque, a target wheel brake torque, and a target shock-absorber additional force, and output the target front-wheel-steering angle, the target rear-wheel-steering angle, the target wheel drive torque, the target wheel brake torque, and the target shock-absorber additional force.

In a case where a component of the chassis integrated control system fails, a constraint boundary of each of the control variables is updated according to actual performance of each component. For example, if the front-wheel-steering motor assembly 211 fails and a front-wheel-steering angle control ability is lost, the constraint of the control variable, that is, the front-wheel-steering angle, is set to zero, such that a calculation result of the model predictive control may obtain the target values of each of the control variables in a case where there is no control of the front-wheel-steering angle.

In S160, the wheel-steering motor assembly is controlled using the target front-wheel-steering angle and the target rear-wheel-steering angle, the wheel-side drive motor assembly and the electromechanical brake caliper assembly are controlled using the target wheel drive torque and the target wheel brake torque respectively, and the adjustable shock-absorber assembly is controlled using the target shock-absorber additional force.

In the embodiments of the present disclosure, an optimal tire slip ratio is obtained, a difference between the tire slip ratio obtained in S120 and the optimal tire slip ratio is taken as a control target, and a proportion-integral-differential (PID) controller is used taking a wheel drive torque and a wheel brake torque as control targets to obtain and output a first target wheel drive torque and a first target wheel brake torque.

The absolute values of the target wheel drive torque and the target wheel brake torque obtained in S140 are respectively compared with the absolute values of the first target wheel drive torque and the first target wheel brake torque, and the ones with smaller absolute values are selected as a final target wheel drive torque and a final target wheel brake torque for controlling the wheel-side drive motor assembly 410 and the electromechanical brake caliper assembly 310 respectively.

The front-wheel-steering motor assembly 211 is controlled using the target front-wheel-steering angle, the rear-wheel-steering motor assembly 212 is controlled using the target rear-wheel-steering angle, and the adjustable shock-absorber assembly 510 is controlled using the target shock-absorber additional force.

The existing chassis electronic control systems are relatively independent during operation, but each of the systems may have its own influence on dynamics states of the vehicle. Therefore, there is such a situation that when multiple relatively independent chassis electronic control systems are running, the impacts of the systems on the vehicle have a certain conflict, resulting in that some chassis electronic control systems cannot achieving the expected performance. In related technologies, it is difficult to truly integrate the longitudinal, horizontal, and vertical parameters of the vehicle to achieve optimal control targets by only coordinating vertical and horizontal control under a single-point working condition. In addition, there are some problems such as the waste of computing resources by separate calculation of multiple system models, the difficulty of merging signals with different time steps and different accuracies, and the time-varying and large differences of control targets in different scenarios. In the embodiments of the present disclosure, the chassis integrated control system may achieve coordinated control among components according to vehicle handling performance target, comfort target, and stability target, thereby achieving vehicle control taking the vehicle handling performance, comfort, and stability into account. The chassis integrated control system and the chassis integrated control method are used for integrating and controlling each electronic control component of the chassis, which achieves the integration of software and hardware, improves the utilization rate of chip computing power and reduces computing power requirements. Compared with the traditional distributed chassis electronic control system, the system architecture is greatly simplified and the cost is greatly reduced. The chassis integrated control system and the chassis integrated control method jointly achieve the heterogeneous redundancy of the longitudinal and lateral control of the vehicle, and achieve the technical effect that the vehicle still has good lateral and longitudinal control ability under any single point failure.

Based on the same inventive concept, the embodiments of the present disclosure further provide an electronic device.

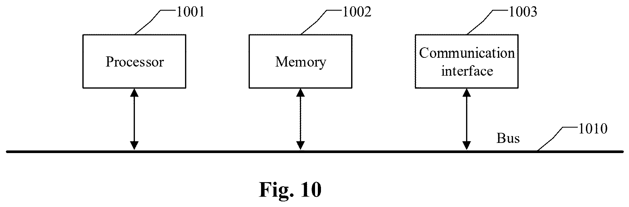

Fig. 10 shows a schematic structural view of hardware of an electronic device according to an embodiment of the present disclosure.

The electronic device may include a processor 1001 and a memory 1002 storing computer program instructions.

Specifically, the processor 1001 may include a Central Processing Unit (CPU), or an Application Specific Integrated Circuit (ASIC), or may be configured as one or more integrated circuits for implementing the embodiments of the present disclosure.

Memory 1002 may include mass memory for data or instructions. By way of example but not limitation, the memory 1002 may include the Hard Disk Drive (HDD), the floppy disk drive, the flash memory, the optical disk, the magneto-optical disk, the magnetic tape, or the Universal Serial Bus (USB) drive, or a combination of two or more thereof. Where appropriate, the memory 1002 may include the removable or non-removable (or fixed) medium. Where appropriate, the memory 1002 may be internal or external to the integrated gateway disaster recovery device. In a particular embodiment, the memory 1002 is the non-volatile solid state memory.

The memory 1002 may include the Read-Only Memory (ROM), the Random Access Memory (RAM), the magnetic disk storage medium device, the optical storage medium device, the flash memory device, the electrical, optical, or other physical/tangible memory storage device. Accordingly, the memory 1002 generally includes one or more tangible (nontransitory) computer-readable storage media (such as, memory device) of software that may be encoded with computer-executable instructions and, the software, when executed (for example by one or more processors), is operable to perform the operations described in the methods according to the above aspects of the present disclosure.

The processor 1001 implements any one of the chassis integrated control methods in the above embodiments by reading and executing the computer program instructions stored in the memory 1002.

In an example, the electronic device may further include a communication interface 1003 and a bus 1010. As shown in Fig. 10, the processor 1001, the memory 1002, and the communication interface 1003 are connected to each other by the bus 1010 and communicate with each other.

The communication interface 1003 is mainly configured to implement communication between various modules, apparatus, units and/or devices in the embodiments of the present disclosure.

The bus 1010 includes hardware, software or both thereof for coupling the components of the electronic device to each other. By way of example but not limitation, the bus may include Accelerated Graphical Port (AGP) or other graphical bus, Enhanced Industry Standard Architecture (EISA) bus, Front Side Bus (FSB), Hyper Transport (HT) interconnect, Industry Standard Architecture (ISA) bus, the infinite bandwidth interconnect, Low Pin Count (LPC) bus, memory bus, Micro Channel Architecture (MCA) bus, Peripheral Component Interconnect (PCI) bus, PCI-Express (PCI-X) bus, Serial Advanced Technology Attachment (SATA) bus, Video Electronics Standards Association Local Bus (VLB) bus, or other suitable bus, or a combination of two or more thereof. Where appropriate, the bus 1010 may include one or more buses. Although the embodiments of the present disclosure describe and illustrate particular buses, any suitable bus or interconnect is contemplated by the present disclosure. The electronic device may carry out the chassis integrated control method in the embodiments of the present disclosure, thereby implementing the chassis integrated control method as shown in Fig. 9.

In addition, the embodiments of the present disclosure may provide a computer storage medium for implementing the chassis integrated control method in the above embodiments. The computer storage medium has stored thereon computer program instructions which, when executed by a processor, implement any one of the chassis integrated control method in the above embodiments.

The present disclosure further provides a computer program product, wherein when instructions in the computer program product are executed by a processor of an electronic device, it causes the electronic device to carry out each step of the chassis integrated control method in the above embodiments.

It should be noted that, this disclosure is not limited to the specific configurations and processes described above and illustrated in the drawings. For the sake of brevity, a detailed description of known methods is omitted here. In the embodiments described above, a number of specific steps have been described and shown as examples. However, the method processes of the present disclosure are not limited to the specific steps described and illustrated herein, and those skilled in the art can make various changes, modifications, and additions, or change the order between steps, after understanding the inventive concept of the present disclosure.

The functional blocks shown in the block diagrams described above may be implemented in hardware, software, firmware, or a combination thereof. When implemented in hardware, it may be, for example, an electronic circuit, an ASIC, appropriate firmware, a plug-in, a function card, and so on. When implemented in software, the elements of the present disclosure are programs or code segments used to perform the required tasks. The programs or code segments may be stored in a machine-readable medium or transmitted over a transmission medium or communication link by a data signal carried in a carrier wave. The "machine-readable medium" may include any medium that can store or transmit information. Examples of the machine-readable medium include an electronic circuit, a semiconductor memory device, an ROM, a flash memory, an Erasable ROM (EROM), a floppy disk, a Compact Disc Read-Only Memory (CD-ROM), an optical disk, a hard disk, an optical fiber medium, a Radio Frequency (RF) link, and so on. The code segments may be downloaded via a computer network, such as the Internet, an intranet, or the like.

It should also be noted that, the exemplary embodiments mentioned in this disclosure describe methods or systems based on a series of steps or apparatus. However, the present disclosure is not limited to the order of the steps described above, that is, the steps may be performed in the order mentioned in the embodiments, or may be performed in an order different from that in the embodiments, or several steps may be performed at the same time.

Aspects of the present disclosure are described above with reference to flow charts and/or block diagrams of the methods, devices (systems), and computer program products according to the embodiments of the present disclosure. It will be understood that, each block in the flow charts and/or block diagrams, and a combination of any of blocks in the flow charts and/or block diagrams, may be implemented by computer program instructions. These computer program instructions may be provided to a processor of a general purpose computer, a special purpose computer, or other programmable data processing apparatus to produce a machine, such that the instructions, which being executed via the processor of the computer or other programmable data processing apparatus, enable the implementation of the functions/actions specified in one or more blocks in the flow charts and/or block diagrams. Such a processor may be, but is not limited to, a general purpose processor, a special purpose processor, an application specific processor, or field programmable logic circuit. It should also be understood that, each block in the block diagrams and/or flow charts, and a combination of any of blocks in the block diagrams and/or flow charts, may also be implemented by a special purpose hardware that performs the specified functions or actions, or a combination of special purpose hardware and computer instructions.

The above are only specific implementations of the present disclosure. Those skilled in the art can clearly understand that, for the convenience and brevity of the description, the specific working processes of the above-described systems, modules and controllers can be referred to the corresponding processes in the foregoing method embodiments, which is not repeated here. It should be understood that, the protection scope of this disclosure is not limited to this, and any person skilled in the art can easily think of various equivalent modifications or replacements within the technical scope

# EP 4 663 500 A1

disclosed in this disclosure, and these modifications or replacements should all be covered within the scope of protection of this disclosure.

## Claims

1.  A chassis integrated control system, comprising:

    a chassis integrated controller, and
    a wheel-steering motor assembly, an electromechanical brake caliper assembly, a wheel-side drive motor assembly, an adjustable shock-absorber assembly, a wheel-speed sensor, a front-view camera assembly, a height sensor, an inertial navigation sensor, a steering-wheel angle sensor, a steering-wheel torque sensor, a brake pedal displacement sensor, an accelerator pedal displacement sensor, and a brake pedal switch that are connected to the chassis integrated controller by hard wire,
    wherein

    the wheel-steering motor assembly is configured to provide a wheel-steering angle signal to the chassis integrated controller,
    the electromechanical brake caliper assembly is configured to provide an electromechanical brake caliper clamping force signal to the chassis integrated controller,
    the wheel-side drive motor assembly is configured to provide a drive torque signal to the chassis integrated controller,
    the wheel-speed sensor is configured to provide a wheel-speed signal to the chassis integrated controller,
    the front-view camera assembly is configured to provide a front-view camera image signal to the chassis integrated controller,
    the height sensor is configured to provide a suspension height signal to the chassis integrated controller,
    the inertial navigation sensor is configured to provide an acceleration signal and an angular rate signal of a vehicle body to the chassis integrated controller,
    the steering-wheel angle sensor is configured to provide a steering-wheel angle signal to the chassis integrated controller,
    the steering-wheel torque sensor is configured to provide a driver-applied steering-wheel torque signal to the chassis integrated controller,
    the brake pedal displacement sensor is configured to provide a brake pedal displacement signal to the chassis integrated controller,
    the accelerator pedal displacement sensor is configured to provide an accelerator pedal displacement signal to the chassis integrated controller,
    the brake pedal switch is configured to provide a brake pedal applied status signal to the chassis integrated controller, and
    the chassis integrated controller is configured to:

    set, in a case where a target signal provided by a target component among a plurality of components is not acquired, the target signal as a first signal, and merge acquired signals of the plurality of components and the first signal using Kalman filtering and a multi-degree-of-freedom vehicle model to obtain dynamics parameters of a vehicle, the target signal being a signal provided by any one of the plurality of components;
    logically determine an intention of a driver using the first signal that is related to the driver to obtain intention information of the driver;
    input the intention information and parameter information of the vehicle to a preset linear vehicle model to obtain target dynamics parameters of the vehicle;
    construct a cost function, input the target dynamics parameters, a vehicle comfort target value, and the dynamics parameters to the cost function and the multi-degree-of-freedom vehicle model, and determine a target front-wheel-steering angle, a target rear-wheel-steering angle, a target wheel drive torque, a target wheel brake torque, and a target shock-absorber additional force; and
    control the wheel-steering motor assembly using the target front-wheel-steering angle and the target rear-wheel-steering angle, control the wheel-side drive motor assembly and the electromechanical brake caliper assembly using the target wheel drive torque and the target wheel brake torque respectively, and control the adjustable shock-absorber assembly using the target shock-absorber additional force.

15

2. The chassis integrated control system according to claim 1, further comprising a road feel motor assembly which is connected to the chassis integrated controller by hard wire and is configured to provide the driver-applied steering-wheel torque signal to the chassis integrated controller.

3. The chassis integrated control system according to claim 1 or 2, further comprising a wheel-side motor controller assembly which is connected to the chassis integrated controller through a communication bus and connected to the wheel-side drive motor assembly by hard wire, and is configured to control a rotation speed and a torque of a motor in the wheel-side drive motor assembly.

4. The chassis integrated control system according to any one of claims 1 to 3, wherein the chassis integrated controller comprises a wheel-speed signal processing circuit and a micro-control unit;

   the wheel-speed sensor is connected to the micro-control unit through the wheel-speed signal processing circuit;
   the wheel-speed signal processing circuit is configured to convert a wheel-speed signal to a target wheel-speed signal that is identifiable by the micro-control unit; and
   the micro-control unit is configured to:

   set, in a case where a target signal provided by a target component among a plurality of components is not acquired, the target signal as a first signal, and merge acquired signals of the plurality of components and the first signal using Kalman filtering and a multi-degree-of-freedom vehicle model to obtain dynamics parameters of the vehicle, the target signal being a signal provided by any one of the plurality of components;
   logically determine an intention of a driver using the first signal that is related to the driver to obtain intention information of the driver;
   input the intention information and parameter information of the vehicle to a preset linear vehicle model to obtain target dynamics parameters of the vehicle;
   construct a cost function, input the target dynamics parameters, a vehicle comfort target value, and the dynamics parameters to the cost function and the multi-degree-of-freedom vehicle model, and determine a target front-wheel-steering angle, a target rear-wheel-steering angle, a target wheel drive torque, a target wheel brake torque, and a target shock-absorber additional force; and
   control the wheel-steering motor assembly using the target front-wheel-steering angle and the target rear-wheel-steering angle, control the wheel-side drive motor assembly and the electromechanical brake caliper assembly using the target wheel drive torque and the target wheel brake torque respectively, and control the adjustable shock-absorber assembly using the target shock-absorber additional force.

5. The chassis integrated control system according to any one of claims 1 to 4, wherein the adjustable shock-absorber assembly comprises a solenoid coil and a hydraulic solenoid valve assembly, and is configured to adjust a damping force of the vehicle.

6. The chassis integrated control system according to any one of claims 1 to 5, wherein the adjustable shock-absorber assembly is configured to adjust a damping force of the vehicle in a magnetorheological manner.

7. The chassis integrated control system according to any one of claims 1 to 6, further comprising an air spring gas distribution valve assembly and an air spring compressor assembly which are separately connected to the chassis integrated controller by hard wire and are configured to adjust a height of the vehicle.

8. The chassis integrated control system according to any one of claims 1 to 7, further comprising an Ethernet cable which is connected to the chassis integrated controller and configured to provide target data of the vehicle.

9. The chassis integrated control system according to any one of claims 1 to 8, further comprising a vehicle-mounted power supply which is connected to the chassis integrated controller through a power management circuit in the chassis integrated controller, and configured to provide power to the chassis integrated controller.

10. A chassis integrated control method, comprising:

   acquiring signals of a plurality of components, the signals comprising a steering angle signal, an electromechanical brake caliper clamping force signal, a torque signal, a wheel-speed signal, an image signal, a suspension height signal, an acceleration signal, an angular rate signal, a displacement signal, and a brake pedal applied status signal;

setting, in a case where a target signal provided by a target component among a plurality of components is not acquired, the target signal as a first signal, and merging acquired signals of the plurality of components and the first signal using Kalman filtering and a multi-degree-of-freedom vehicle model to obtain dynamics parameters of the vehicle, the target signal being a signal provided by any one of the plurality of components;

logically determining an intention of a driver using the first signal that is related to the driver to obtain intention information of the driver;

inputting the intention information and parameter information of the vehicle to a preset linear vehicle model to obtain target dynamics parameters of the vehicle;

constructing a cost function, inputting the target dynamics parameters, a vehicle comfort target value, and the dynamics parameters to the cost function and the multi-degree-of-freedom vehicle model, and determining a target front-wheel-steering angle, a target rear-wheel-steering angle, a target wheel drive torque, a target wheel brake torque, and a target shock-absorber additional force; and

controlling the wheel-steering motor assembly using the target front-wheel-steering angle and the target rear-wheel-steering angle, controlling the wheel-side drive motor assembly and the electromechanical brake caliper assembly using the target wheel drive torque and the target wheel brake torque respectively, and controlling the adjustable shock-absorber assembly using the target shock-absorber additional force.

11. An electronic device, comprising a processor and a memory storing computer program instructions, wherein the processor, when executing the computer program instructions, carries out the chassis integrated control method according to claim 10.

12. A computer-readable storage medium storing computer program instructions, wherein the computer program instructions, when executed by a processor, carry out the chassis integrated control method according to claim 10.

13. A computer program product, wherein when instructions in the computer program product are executed by a processor of an electronic device, it causes the electronic device to carry out the chassis integrated control method according to claim 10.

**Fig. 1**

Fig. 2

**Fig. 3**

Fig. 4

**Fig. 5**

**Fig. 6**

**Fig. 7**

**Fig. 8**

Acquiring signals of a plurality of components, the signals comprising a steering angle signal, an electromechanical brake caliper clamping force signal, a torque signal, a wheel-speed signal, an image signal, a suspension height signal, an acceleration signal, an angular rate signal, a displacement signal, and a brake pedal applied status signal ⌐⌐ S110

↓

Setting, in a case where a target signal provided by a target component among a plurality of components is not acquired, the target signal as a first signal, and merging acquired signals of the plurality of components and the first signal using Kalman filtering and a multi-degree-of-freedom vehicle model to obtain dynamics parameters of the vehicle, the target signal being a signal provided by any one of the plurality of components ⌐⌐ S120

↓

Logically determining an intention of a driver using the first signal that is related to the driver to obtain intention information of the driver ⌐⌐ S130

↓

Inputting the intention information and parameter information of the vehicle to a preset linear vehicle model to obtain target dynamics parameters of the vehicle ⌐⌐ S140

↓

Constructing a cost function, inputting the target dynamics parameters, a vehicle comfort target value, and the dynamics parameters to the cost function and the multi-degree-of-freedom vehicle model, and determining a target front-wheel-steering angle, a target rear-wheel-steering angle, a target wheel drive torque, a target wheel brake torque, and a target shock-absorber additional force ⌐⌐ S150

↓

Controlling the wheel-steering motor assembly using the target front-wheel-steering angle and the target rear-wheel-steering angle, controlling the wheel-side drive motor assembly and the electromechanical brake caliper assembly using the target wheel drive torque and the target wheel brake torque respectively, and controlling the adjustable shock-absorber assembly using the target shock-absorber additional force ⌐⌐ S160

**Fig. 9**

Fig. 10

## INTERNATIONAL SEARCH REPORT

| International application No. |
|---|
| **PCT/CN2023/137780** |

### A. CLASSIFICATION OF SUBJECT MATTER

B60W 50/029(2012.01)i; B60W 10/08(2006.01)i; B60W 10/18(2012.01)i; B60W 10/22(2006.01)i; B60W 40/00(2006.01)i

According to International Patent Classification (IPC) or to both national classification and IPC

### B. FIELDS SEARCHED

Minimum documentation searched (classification system followed by classification symbols)

IPC: B60W

Documentation searched other than minimum documentation to the extent that such documents are included in the fields searched

Electronic data base consulted during the international search (name of data base and, where practicable, search terms used)

CNTXT, ENTXT, ENTXTC, DWPI, VEN, CNKI: 底盘, 动力学, 参数, 多自由度, 卡尔曼滤波, 控制, 意图, 函数, 信号, chassis, dynamics, parameter+, freedom, kalman, filter+, control+, intention, function, signal

### C. DOCUMENTS CONSIDERED TO BE RELEVANT

| Category* | Citation of document, with indication, where appropriate, of the relevant passages | Relevant to claim No. |
|---|---|---|
| X | CN 112407104 A (GUANGZHOU AUTOMOBILE GROUP CO., LTD.) 26 February 2021 (2021-02-26) <br> description, pages 3-7, and figures 1-2 | 1-13 |
| X | CN 106515716 A (SHENYANG UNIVERSITY OF TECHNOLOGY) 22 March 2017 (2017-03-22) <br> description, pages 7-15, and figures 1-11 | 1-13 |
| A | CN 116061958 A (CHONGQING CHANG'AN AUTOMOBILE CO., LTD.) 05 May 2023 (2023-05-05) <br> entire document | 1-13 |
| A | CN 210760976 U (JILIN UNIVERSITY) 16 June 2020 (2020-06-16) <br> entire document | 1-13 |
| A | JP 2008055994 A (TOYOTA MOTOR CORP.) 13 March 2008 (2008-03-13) <br> entire document | 1-13 |
| A | US 2016318501 A1 (THOMSON POWER INC.) 03 November 2016 (2016-11-03) <br> entire document | 1-13 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 March 2024** | **01 April 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/137780**

| Patent document cited in search report | | | Publication date (day/month/year) | Patent family member(s) | | | Publication date (day/month/year) |
|---|---|---|---|---|---|---|---|
| CN | 112407104 | A | 26 February 2021 | None | | | |
| CN | 106515716 | A | 22 March 2017 | None | | | |
| CN | 116061958 | A | 05 May 2023 | None | | | |
| CN | 210760976 | U | 16 June 2020 | None | | | |
| JP | 2008055994 | A | 13 March 2008 | JP | 4811199 | B2 | 09 November 2011 |
| US | 2016318501 | A1 | 03 November 2016 | WO | 2015089650 | A1 | 25 June 2015 |
| | | | | CA | 2836450 | A1 | 16 June 2015 |
| | | | | US | 10065627 | B2 | 04 September 2018 |

Form PCT/ISA/210 (patent family annex) (July 2022)

**REFERENCES CITED IN THE DESCRIPTION**

**Patent documents cited in the description**

- CN 202310822640X